Europäisches Patentamt

European Patent Office

Office européen des brevets

(19)

(11) EP 0 524 214 B1

(12) **EUROPÄISCHE PATENTSCHRIFT**

(45) Veröffentlichungstag und Bekanntmachung des Hinweises auf die Patenterteilung:
**20.03.1996 Patentblatt 1996/12**

(21) Anmeldenummer: **91907132.4**

(22) Anmeldetag: **11.04.1991**

(51) Int Cl.[6]: **G01N 15/08**

(86) Internationale Anmeldenummer:
**PCT/DE91/00304**

(87) Internationale Veröffentlichungsnummer:
**WO 91/15748 (17.10.1991 Gazette 1991/24)**

(54) **VERFAHREN ZUR MESSUNG DES DIFFUSIONS- UND PERMEATIONSKOEFFIZIENTEN EINES GASES**

PROCESS FOR MEASURING THE DIFFUSION AND PERMEATION COEFFICIENT OF A GAS

PROCEDE DE MESURE DU COEFFICIENT DE DIFFUSION ET DE PERMEATION D'UN GAZ

(84) Benannte Vertragsstaaten:
**AT BE CH DE FR GB IT LI NL SE**

(30) Priorität: **11.04.1990 DE 4011731**

(43) Veröffentlichungstag der Anmeldung:
**27.01.1993 Patentblatt 1993/04**

(73) Patentinhaber: **SIEMENS AKTIENGESELLSCHAFT D-80333 München (DE)**

(72) Erfinder: **ADAM, Gottfried D-5206 Neunkirchen-Seelscheid 1 (DE)**

(56) Entgegenhaltungen:
**DE-B- 2 556 217          GB-A- 2 197 080
US-A- 4 389 878**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft ein Verfahren zur Messung des Diffusionskoeffizienten eines Gases durch eine Membran einer bestimmten Dicke aus einem gummielastischen Werkstoff, die zwei mit dem Gas füllbare Kammern voneinander trennt, sowie eine Vorrichtung zur Durchführung des Verfahrens mit Einrichtungen zur Messung der Gastemperatur und des -druckes in der Umgebung und in jeder der beiden Kammern.

In der deutschen Norm DIN 53536 ist ein Verfahren zur Bestimmung der Gasdurchlässigkeit von Elastomeren genormt worden, das es gestattet, den Gasdurchlässigkeits- oder Permeationskoeffizienten von Elastomeren in Abhängigkeit von der Temperatur bei verschiedenen Druckgefällen zu bestimmen. Dabei gibt der Permeationskoeffizient an, welches Gasvolumen bei einer gegebenen Druckdifferenz in einer bestimmten Zeit durch eine Probe bekannter Fläche und Dicke hindurchtritt. Dabei wird davon ausgegangen, daß sich die Permeation in drei Schritten vollzieht, nämlich 1. Lösung des Gases in der Probe, 2. Diffusion des gelösten Gases durch die Probe und 3. Verdampfung des Gases aus der Probe. Auch für den Teilvorgang der Diffusion läßt sich ein Koeffizient angeben, dessen Kenntnis im Zusammenhang mit bestimmten technischen Vorgängen auch selbständig von Interesse sein kann. Das in der Norm beschriebene Verfahren basiert auf der Messung des Volumenstromes des durch die Membran hindurchstretenden Gases, aus dem (bei Benutzung bestimmter Korrekturfaktoren) der Permeationskoeffizient errechnet werden kann. Ein Verfahren zur Messung der Permeation unter Benutzung einer Recheneinrichtung ist aus der US-A-4,555,934 bekannt, in dem der gesuchte Wert sich aus der Zeit ergibt, die erforderlich ist, um auf der stromabwärts gelegenen Seite der Membran eine bestimmte Druckänderung hervorzurufen. Dieses Verfahren liefert ebensowenig wie das nach der beschriebenen Norm neben dem Permeations- auch den Diffusionkoeffizienten. Nachteil dieses Verfahren ist darüber hinaus, daß die Probenvorbereitung recht aufwendig ist, indem die Proben vor Beginn der Messungen etwa 24 Stunden lang im Vakuum ausgasen müssen.

US-A-4 389 878 offenbart ein Verfahren zur Bestimmung eines Gaspermeationsfaktors einer Probe, mittels des zeitlichen Anstieges eines Gasdrucks, der durch Gasdiffusion durch die Probe erzeugt wird.

Aufgabe der vorliegenden Erfindung ist ein Verfahren zur Bestimmung des Diffusionskoeffizienten eines Gases durch eine gummielastische Membran und, daraus abgeleitet, des dazugehörigen Permeationkoeffizienten, das ohne aufwendige Probenvorbereitungen durchgeführt werden kann und in kürzest möglicher Zeit verwertbare Ergebnisse liefert. Eine weitere Aufgabe der Erfindung ist die Bereitstellung einer Vorrichtung zur Durchführung des Verfahrens, die unter Anlehnung an bekannte, erprobte Versuchsanordnungen mit einem Minimum an zusätzlichem apparativem Aufwand auskommt.

Zur Lösung der ersten dieser Aufgaben wird ein Verfahren vorgeschlagen, das in mehreren Stufen abläuft: Zunächst wird in an sich bekannter Weise der Druck und die Temperatur in jeder der Kammern zu einem ersten Zeitpunkt gemessen und anschließend die Messung zu einem zweiten Zeitpunkt wiederholt; danach wird die Gaskonzentration in jeder der Kammern zu jedem der Zeitpunkte aus der Gleichung

$$c_i(t_i) = \frac{p_i(t_i)}{R \cdot T_i(t_i)} \; ; \; i=1,2 \tag{1}$$

bestimmt; danach wird mit einem zunächst angenommenen Wert für den Diffusionskoeffizienten die Gleichung

$$c(x, t) = D \int_{t_1}^{t_2} \frac{d^2 c(x, t)}{dx^2} \, dt \tag{2}$$

gelöst. Diese Rechnung wird mit immer wieder veränderten Werten für den Diffusionskoeffizienten solange wiederholt, bis sie als Ergebnis

$$c(x = M, t = t_2) = c_2(t_2)$$

liefert, d. h. bis unter Annahme eines bestimmten, nunmehr als richtig festgestellten Wertes des Diffusionskoeffizienten der errechnete Wert für die Gaskonzentration in der zweiten der Kammern zum zweiten Zeitpunkt mit dem aus den gemessenen Druckund Temperaturwerten bestimmten Konzentrationswert übereinstimmt. Für die Durchführung einer solchen iterativen Rechnung stehen dem Fachmann eine Anzahl bekannter Algorithmen zur Verfügung.

Das beschriebene Verfahren liefert den zu einem bestimmten Zeitpunkt geltenden Diffusionskoeffizienten. Wegen der oben angedeuteten komplizierten und unstetigen Vorgänge, die beim Durchtritt eines Gases durch einen Elastomeren auftreten, kann dieser Wert u. U. falsch sein, wenn sich das System zum Zeitpunkt der Messungen noch in einem Übergangszustand vom Anfangs- in den Endzustand befindet. Daher wird in weiterer Ausgestaltung der Erfindung vorgeschlagen, daß das Verfahren zu weiteren Zeitpunkten wiederholt wird, bis die Differenz der an zwei aufeinander folgenden Zeitpunkten festgestellten Diffusionskoeffizienten innerhalb einer vorab festgelegten Variationbreite liegt.

Zur Feststellung des technisch meist interessanteren Permeationskoeffizienten wird in weiterer Ausgestaltung der Erfindung vorgeschlagen, daß Umgebungstemperatur und -druck gemessen bzw. (etwa in Form einer Normatmosphäre) angenommen werden und unter Einbeziehung der so gewonnenen Werte die Gleichung

$$Q = - \frac{D \cdot R \cdot T_0 \cdot M}{(p_1 - p_2) \cdot p_0} \cdot \left. \frac{dc}{dx} \right|_{x = M} \qquad (4)$$

gelöst wird, die den gesuchten Permeationskoeffizienten liefert.

Eine Vorrichtung zur Durchführung des Verfahrens mit den beschriebenen Merkmalen ist darüber hinaus dadurch gekennzeichnet, daß beide Kammern gegenüber der Umgebung verschlossen sind, so daß in ihr das erfindungsgemäße Verfahren auch mit toxischen oder anderweitig gefährlichen Gasen durchgeführt werden kann, deren Entweichen in die Umgebung verhindert werden muß; darüber hinaus ist sie mit einer Recheneinrichtung zur Durchführung des erfindungsgemäßen Verfahrens und seiner Abwandlungen in Echtzeit versehen.

Um Werkstoffe messen zu können, deren Diffusions- und Permeationswerte sich um mehr als zwei bis drei Größenordnunen voneinander unterscheiden, wird in weiterer Ausgestaltung der Erfindung vorgeschlagen, daß das Volumen der zweiten Kammer der Vorrichtung variabel ist, d. h. für den jeweiligen Versuch unterschiedlich groß gewählt werden kann, um Messungen mit Membranen aus einer Vielzahl von Werkstoffen und mit allen in Frage kommenden technischen Gasen durchführen zu können. Da der Permeationskoeffizient von der Temperatur abhängt, wird in weiterer Ausgestaltung der Erfindung vorgeschlagen, daß die erste und/oder zweite Kammer mit einer Heizung versehen sind, so daß die Membran und das Gas auf Temperaturen oberhalb der Umgebungstemperatur aufgeheizt werden können, um den Permeationskoeffizienten auch bei diesen Temperaturen bestimmen zu können. Ein Ausführungsbeispiel der Erfindung ist in der Zeichnung dargestellt, und zwar zeigt

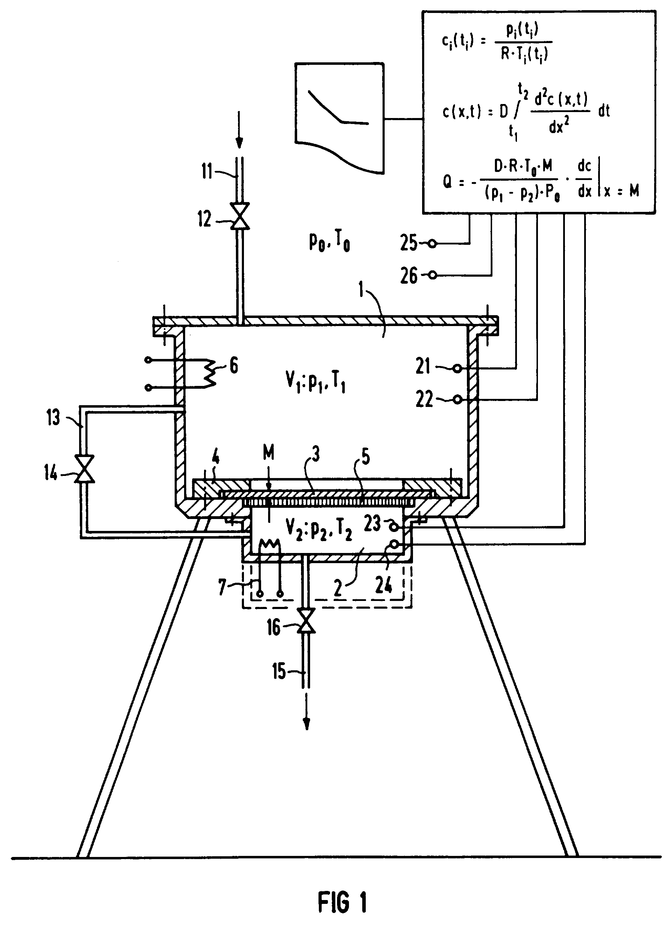

Figur 1 die Vorrichtung in schematischer Form im Querschnitt und
Figur 2 ein mit Hilfe der Vorrichtung gewonnenes typisches Diagramm.

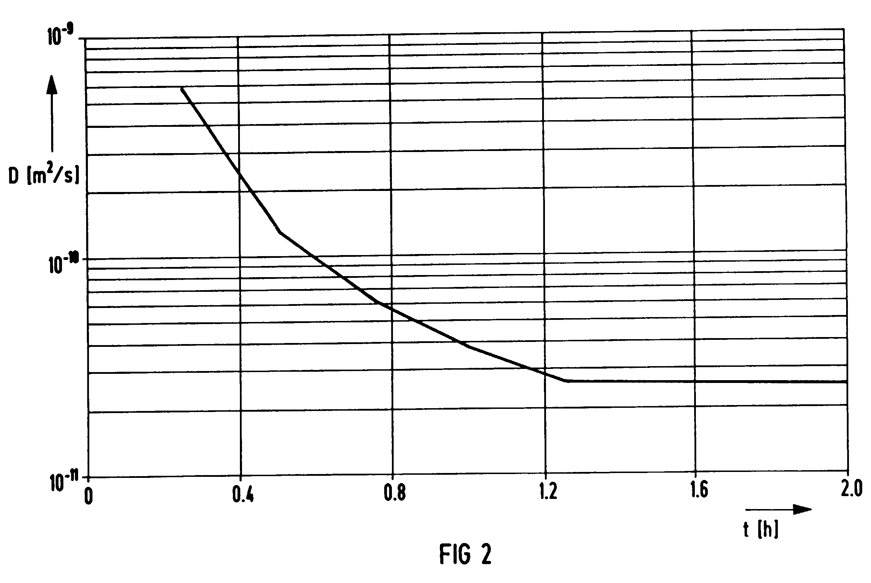

Die Vorrichtung besteht aus einer ersten Kammer 1 mit einem Volumen $V_1$ und einer zweiten Kammer 2 mit dem Volumen $V_2$, die durch eine Membran 3 aus einem elastomeren Werkstoff voneinander getrennt sind, dessen Diffusions- und Permeationskoeffizient ermittelt werden soll. Dabei können, wie durch den gestrichelten Umriß angedeutet, zweite Kammern 2 unterschiedlichen Volumens verwendet werden. Die Membran 3 weist die Dicke M auf. Mittels einer durch ein Ventil 12 absperrbaren Zuleitung 11 kann in die erste Kammer 1 ein Prüfgas eingeführt werden. Über eine Spülleitung 13, die ebenfalls mittels eines Ventils 14 absperrbar ist, wird zunächst auch die zweite Kammer 2 mit dem Prüfgas beaufschlagt. Es kann aus dieser vor Beendigung des Spülens und nach Beendigung des Versuches durch eine Abflußleitung 15 entweichen, die ebenfalls mittels eines weiteren Ventils 16 absperrbar ist. Die Membran 3 ist an ihrem Rand mittels eines Befestigungsringes 4 dicht am Boden der ersten Kammer 1 befestigt und gegebenenfalls durch ein Gitter 5 von der Druckdifferenz $(p_1 - p_2)$ zwischen der ersten und zweiten Kammer 1, 2 entlastet, die entsteht, wenn der Druck des Gases in der ersten Kammer 1 über denjenigen in der zweiten Kammer erhöht wird. Mittels je einer elektrischen Heizvorrichtung 6, 7 können in den beiden Kammern 1, 2 definierte Temperaturverhältnisse geschaffen werden, so daß die Membran ebenfalls eine definierte Temperatur annimmt. Dies kann nicht nur dazu dienen, um Schwankungen der Umgebungstemperatur über die Dauer der Messung auszugleichen, sondern auch um Messungen bei erhöhter Temperatur durchzuführen. Mittels getrennter Meßaufnehmer 21 für den Druck $p_1$ und 22 für die Temperatur $T_1$ in der ersten Kammer 1, 23 für den Druck $p_2$ und 24 für die Temperatur $T_2$ in der zweiten Kammer 2 sowie 25 für den Umgebungsdruck $p_0$ und 26 für die Umgebungstemperatur $T_0$ werden Meßwerte gewonnen, die einer Recheneinrichtung 8 zugeführt werden. Wenn die örtlichen Verhältnisse gleichbleibende Umgebungsbedingungen gewährleisten, bzw. wenn deren mögliche Schwankungen so gering sind, daß sie ohne nennenswerten Einfluß auf das Meßergebnis bleiben, kann auf die Meßaufnehmer 25, 26 verzichtet und für die Rechnung die für den jeweiligen Ort geltenden Normalverhältnisse angenommen werden. In der Recheneinheit 8 werden aus den genannten, zu verschiedenen Zeitpunkten gemessenen Druck- und Temperaturwerten in Verbindung mit den darin gespeicherten oder getrennt eingegebenen Werten für die Gaskonstante R und die Dicke M der Membran die Werte für den Diffusionskoeffizienten D und den Permeationskoeffizienten Q zu jedem dieser Zeitpunkte errechnet und in Form eines Diagrammes zur Anzeige gebracht, wie es in der Figur 2 dargestellt ist. Dabei ist auf der Abszisse die Versuchsdauer t in Stunden aufgetragen und auf der Ordinate der Diffusionskoeffizient D ($m^2 sec.^{-1}$). Alternativ oder zusätzlich hierzu kann ein Diagramm ähnlicher Art ausgegeben werden, auf dessen Ordinate die Höhe der für den Permeationskoeffizienten Q errechneten Werte in $m^2 \cdot sec.^{-1} \cdot Pa^{-1}$ aufgetragen ist. Im dargestellten Beispiel bestand die Membran 3 aus Butyl und als Prüfgas wurde Argon verwendet. Die Messung fand bei Raumtemperatur statt. Der Druck $p_1$ des Prüfgases in der Kammer 1 wird, zweckmäßigerweise je nach Permeabilität des Prüflings 3, mit Werten zwischen 0,5 und 3 bar Überdruck $(p_1 - p_2)$ vorgegeben; dabei wird der Druck $p_2$ in der zweiten Kammer 2 auf Normaldruck eingeregelt. Vor Beginn der Messungen werden beide Kammern 1, 2 mit dem Prüfgas gespült, um eine Verfälschung der Meßergebnisse durch verbleibende Luftreste zu vermeiden.

Es ist erkennbar (links im Diagramm), daß zunächst, solange die Membran selbst noch ausgast, ein zu hoher Wert D angezeigt wird. Im laufe der iterativ durchgeführten Rechnung sinkt er jedoch ab, um schließlich nach einer Versuchsdauer von im Beispiel 1,2 Std. einen gleichbleibenden Wert anzunehmen, der dann der gesuchte Diffusionskoeffizient ist. Ein Diagramm, in dem statt dessen der Permeationskoeffizient angezeigt wird, hat ein grundsätzlich ähnliches Aussehen.

**Patentansprüche**

1. Verfahren zur Messung des Diffusionskoeffizienten D eines Gases durch eine Membran(3) der Dicke M, die zwei mit dem Gas füllbare Kammern(1,2) voneinander trennt, unter Einbeziehung folgender Schritte:

   a) Messung des Drucks und der Temperatur in jeder der Kammern(1,2) zu einem ersten Zeitpunkt $t_1$ ;

   b) Messung des Drucks und der Temperatur in jeder der Kammern(1,2) zu einem zweiten Zeitpunkt $t_2$;

   c) Bestimmung der Gaskonzentration in jeder der Kammern(1,2) zu jedem der Zeitpunkte $t_1$, $t_z$ aus der Gleichung

$$c_i(t_j) = \frac{p_i(t_j)}{R \cdot T_i(t_j)} \; ; \; i=1,2; j=1,2$$

   worin R die Gaskonstante des Gases bezeichnet;

   d) Berechnung des Diffusionskoeffizienten D sowie einer Funktion c(x,t), welche eine molare Konzentration des in der Membran(3) gelösten Gases in Abhängigkeit von einer räumlichen Koordinate x und der Zeit t angibt, wobei x einen Abstand von der ersten Kammer(1) innerhalb der Membran(3) angibt und t innerhalb eines Zeitintervalls liegt, welches den ersten Zeitpunkt und den zweiten Zeitpunkt umfaßt, durch Lösung der partiellen Differentialgleichung

$$\frac{\partial}{\partial t}c(x,t) = D \cdot \frac{\partial^2}{\partial x^2}c(x,t)$$

   unter der Bedingung, daß

$$c(x=0, t=t_1) = c_1(t_1)$$

$$c(x=0, t=t_2) = c_1(t_2)$$

$$c(x=M, t=t_2) = c_2(t_2).$$

2. Verfahren nach Anspruch 1, wobei die Membran(3) aus einem gummielastischen Werkstoff besteht.

3. Verfahren nach Anspruch 1 oder Anspruch 2, wobei die partielle Differentialgleichung gelöst wird durch wiederholte Lösung der Gleichung

$$c(x, t) = D \cdot \int_{t_1}^{t_2} \left[ \frac{\partial^2}{\partial x^2}c(x, t) \right] dt$$

unter der Bedingung

$$c(x=0, t=t_1) = c_1(t_2)$$

$$c(x=0, t=t_2) = c_1(t_2),$$

wobei ein anfangs angenommener Wert für D variiert wird, bis

$$c(x=M, t=t_2) = c_2(t_2)$$

erfüllt ist.

4. Verfahren nach einem der vorhergehenden Ansprüche, **dadurch gekennzeichnet,** daß es zu weiteren Zeitpunkten $(t_{1,l} \dots t_{1,i}, t_{2,l} \dots t_{2,i})$ wiederholt wird, bis

$$D(t_i) - D(t_{i-l}) <= k;$$

ist, wobei k die gewählte Variationsbreite ist.

5. Verfahren nach einem der vorhergehenden Ansprüche, **dadurch gekennzeichnet,** daß

a) Umgebungstemperatur $(T_0)$ und -druck $(p_0)$ gemessen oder angenommen werden,
b) zeitgleich die Gleichung

$$Q = - \frac{D \cdot R \cdot T_0 \cdot M}{(p_1 - p_2) \cdot p_0} \cdot \left. \frac{dc}{dx} \right|_{x = M}$$

zur Ermittlung des Permeationskoeffizienten Q gelöst wird.

6. Vorrichtung zur Durchführung des Verfahrens nach einem oder mehreren der Ansprüche 1 bis 5, mit durch eine Membran (3) voneinander getrennter erster und zweiter Kammer (1, 2) und Einrichtungen (22, 24, 26) bzw. (21, 23, 25) zur Messung der Gastemperatur $(T_0, T_1, T_2)$ und des -druckes $(p_0, p_1, p_2)$ in der Umgebung und in jeder der beiden Kammern,
**dadurch gekennzeichnet,** daß

a) beide Kammern (1, 2) gegenüber der Umgebung verschlossen sind,
b) eine Recheneinrichtung (8) zur Durchführung der in den Ansprüchen 1 bis 5 genannten Berechnungen in Echtzeit vorhanden ist.

7. Vorrichtung nach Anspruch 6, **dadurch gekennzeichnet,** daß das Volumen $(V_2)$ der zweiten Kammer (2) variabel ist.

8. Vorrichtung nach Anspruch 6 oder 7, **dadurch gekennzeichnet,** daß die erste und/oder zweite Kammer (1, 2) mit einer Heizung (6, 7) versehen sind.

## Claims

1. Method for measuring the coefficient D of diffusion of a gas through a diaphragm (3) of thickness M which separates from one another two chambers (1, 2) that can be filled with the gas, including the following steps:

a) measuring the pressure and the temperature in each of the chambers (1, 2) at a first instant $t_1$;
b) measuring the pressure and the temperature in each of the chambers (1, 2) at a second instant $t_2$;
c) determining the gas concentration in each of the chambers (1, 2) at each of the instants $t_1$, $t_2$ from the equation

$$c_i(t_j) = \frac{p_i(t_j)}{R \cdot T_i(t_j)} \; ; \; i=1,2; j=1,2$$

in which R denotes the gas constant of the gas;
d) calculating the diffusion coefficient D and a function c(x, t) which specifies a molar concentration of the gas, dissolved in the diaphragm (3), as a function of a spatial coordinate x and the time t, x specifying a distance from the first chamber (1) inside the diaphragm (3) and t being situated within a time interval, which comprises the first instant and the second instant, by solving the partial differential equation

$$\frac{\partial}{\partial t} c(x,t) = D \cdot \frac{\partial^2}{\partial x^2} c(x,t)$$

with the condition that

$$c(x=0, t=t_1) = c_1(t_1)$$

$$c(x=0, t=t_2) = c_1(t_2)$$

$$c(x=M, t=t_2) = c_2(t_2).$$

2. Method according to Claim 1, in which the diaphragm (3) comprises an elastomeric material.

3. Method according to Claim 1 or Claim 2, in which the partial differential equation is solved by repeated solving of the equation

$$c(x, t) = D \cdot \int_{t_1}^{t_2} \left[ \frac{\partial^2}{\partial x^2} c(x, t) \right] dt$$

with the condition that

$$c(x=0, t=t_1) = c_1(t_2)$$

$$c(x=0, t=t_2) = c_1(t_2),$$

an initially assumed value for D being varied until

$$c(x=M, t=t_2) = c_2(t_2)$$

is fulfilled.

4. Method according to one of the preceding claims, characterized in that it is repeated at further instants $(t_{1,1}...t_{1,i}, t_{2,1}...t_{2,i})$ until $D(t_i) - D(t_{i-1}) <= k$; where k is the selected range of variation.

5. Method according to one of the preceding claims, characterized in that

   a) the ambient temperature $(T_0)$ and ambient pressure $(p_0)$ are measured or assumed,
   b) the equation

$$Q = - \frac{D \cdot R \cdot T_0 \cdot M}{(p_1 - p_2) \cdot p_0} \cdot \frac{dc}{dx} \Bigg|_{x = M}$$

   is solved simultaneously in order to determine the permeation coefficient Q.

6. Device for carrying out the method according to one or more of Claims 1 to 5, having a first and second chamber (1, 2), separated from one another by a diaphragm (3), and devices (22, 24, 26) and (21, 23, 25) for measuring the gas temperature $(T_0, T_1, T_2)$ and the gas pressure $(p_0, p_1, p_2)$ in the environment and in each of the two chambers, characterized in that

   a) the two chambers (1, 2) are closed with respect to the environment,
   b) a computing device (8) is present for carrying out in real time the calculations mentioned in Claims 1 to 5.

7. Device according to Claim 6, characterized in that the volume $(V_2)$ of the second chamber (2) is variable.

8. Device according to Claim 6 or 7, characterized in that the first and/or second chamber (1, 2) is/are provided with a heater (6, 7).

**Revendications**

1. Procédé de mesure du coefficient de diffusion D d'un gaz à travers une membrane (3) d'épaisseur M qui sépare l'une de l'autre deux chambres (1, 2) qui peuvent être remplies avec le gaz, englobant les étapes ci-après :

a) la mesure de la pression et de la température dans chacune des chambres (1, 2) à un premier moment $t_1$ ;

b) la mesure de la pression et de la température dans chacune des chambres (1, 2) à un second moment $t_2$;

c) la détermination de la concentration en gaz dans chacune des chambres (1, 2) à chacun des moments $t_1$, $t_2$ à partir de l'équation

$$c_i(t_j) = \frac{p_i(t_j)}{R \cdot T_i(t_j)} \; ; \; i=1,2; j=1,2$$

dans laquelle R désigne la constante du gaz;

d) le calcul du coefficient de diffusion D, ainsi que d'une fonction c(x,t) qui indique une concentration molaire du gaz dissous dans la membrane (3) en fonction d'une coordonnée spatiale x et du temps t, x indiquant une distance de la première chambre (1) à l'intérieur de la membrane (3) et t se trouvant à l'intérieur d'un intervalle de temps qui englobe le premier moment et le second moment, par la résolution de l'équation différentielle partielle

$$\frac{\partial}{\partial t} c(x,t) = D \cdot \frac{\partial^2}{\partial x^2} c(x,t)$$

à condition que :

$$c(x=O, t=t_1) = c_1(t_1)$$

$$c(x=O, t=t_2) = c_1(t_2)$$

$$c(x=M, t=t_2) = c_2(t_2).$$

2. Procédé selon la revendication 1, dans lequel la membrane (3) est constituée d'un matériau possédant une élasticité analogue à celle du caoutchouc.

3. Procédé selon la revendication 1 ou 2, dans lequel on résout l'équation différentielle partielle par résolution répétée de l'équation :

$$c(x, t) = D \cdot \int_{t_1}^{t_2} \left[ \frac{\partial^2}{\partial x^2} c(x, t) \right] dt$$

à condition que :

$$c(x=0, t=t_1) = c_1(t_2)$$

$$c(x=0, t=t_2) = c_1(t_2)$$

en faisant varier une valeur pour D admise au départ jusqu'à ce que l'on obtienne

$$c(x=M, t=t_2) = c_2(t_2).$$

4. Procédé selon l'une quelconque des revendications précédentes, caractérisé en ce qu'on procède à la répétition à d'autres moments ($t_{1,1}$..., $t_{1,i}$, $t_{2,1}$ ... $t_{2,i}$) jusqu'à ce que l'on obtienne $D(t_i) - D(t_{j-1}) <= k$; où k désigne la largeur de variation sélectionnée.

5. Procédé selon l'une quelconque des revendications précédentes, caractérisé en ce que

a) on mesure ou on admet une température ambiante ($T_0$) et une pression ambiante ($P_0$),

b) on résout en même temps l'équation

$$Q = - \frac{D \cdot R \cdot T_0 \cdot M}{(p_1 - p_2) \cdot p_0} \cdot \frac{dc}{dx} \Bigg|_{x = M}$$

pour déterminer le coefficient de perméation Q.

6. Dispositif pour la mise en oeuvre du procédé selon l'une ou plusieurs des revendications 1 à 5, comprenant des première et seconde chambres (1, 2) séparées l'une de l'autre par une membrane (3), ainsi que des mécanismes (22, 24, 26), respectivement (21, 23, 25) pour mesurer la température du gaz ($T_0$, $T_1$, $T_2$) et la pression du gaz ($P_0$, $P_1$, $P_2$) dans l'environnement des deux chambres et à l'intérieur de ces dernières, caractérisé en ce que

    a) les deux chambres (1, 2) sont fermées par rapport à l'environnement,
    b) un calculateur (8) est présent pour effectuer en temps réel les calculs mentionnés dans les revendications 1 à 5.

7. Dispositif selon la revendication 6, caractérisé en ce que le volume ($V_2$) de la seconde chambre (2) est variable.

8. Dispositif selon la revendication 6 ou 7, caractérisé en ce que la première et/ou la seconde chambre (1, 2) sont munies d'un chauffage (6, 7).

$$c_i(t_i) = \frac{p_i(t_i)}{R \cdot T_i(t_i)}$$

$$c(x,t) = D \int_{t_1}^{t_2} \frac{d^2c(x,t)}{dx^2}\, dt$$

$$Q = -\frac{D \cdot R \cdot T_0 \cdot M}{(p_1 - p_2) \cdot P_0} \cdot \frac{dc}{dx}\bigg|_{x=M}$$

FIG 1

FIG 2